# EUROPÄISCHE PATENTANMELDUNG

(11) **EP 0 568 523 A2**
(43) Veröffentlichungstag der Anmeldung: **03.11.1993**
(21) Anmeldenummer: 93890089.1
(22) Anmeldetag: 29.04.1993
(51) Int. Cl.: F24F 5/00, F24D 3/14

(54) **Klimaplatte**

(30) Priorität: 30.04.1992 AT 889/92
(71) Anmelder: Steiner, Martin, A-3370 Ybbs/Österreich (AT)
(72) Erfinder: Steiner, Martin, A-3370 Ybbs/Österreich (AT)
(74) Vertreter: Kliment, Peter

(57) **Zusammenfassung**

Klimaplatte, insbesondere für Wohn- und Büroräume mit auf einer Trägerschicht angeordneten, von einem Kühl- und oder Heizmedium durchströmbaren Leitungen, die gegen den zu klimatisierenden Raum zu abgedeckt sind. Um einen guten Wärmeübergang von den Leitungen (1) zur dem zu klimatisierenden Raum zugekehrten Fläche der Klimaplatte zu erzielen, ist vorgesehen, daß die Leitungen (1) in einer Schicht (2) aus einem hydraulisch abbindenden Mörtel oder einem Bindemittel auf Kunstharzbasis, der bzw. das mit Metallfasern aus gut wärmeleitenden Metallen, wie Stahl, Aluminium oder Kupfer vermischt ist, eingebettet sind.

## Beschreibung

Die Erfindug bezieht sich auf eine Klimaplatte, insbesondere für Wohn- und Büroräume mit auf einer Trägerschicht angeordneten, von einem Kühl- und oder Heizmedium durchströmbaren Leitungen, die gegen den zu klimatisierenden Raum zu abgedeckt sind.

Bekannte Wände weisen im wesentlichen vertikal verlaufende Schächte auf, in denen meist erwärmte Luft geführt wird, die allerdings über entsprechende Auslässe in den zu erwärmenden Raum ausströmt und sich daher mit der Raumluft vermischt. Einen allerdings meist nur geringen Anteil ihrer Wärme gibt die die Wandkanäle durchströmende Luft auch durch die Strahlung der die Wandkanäle gegen den zu erwärmenden Raum zu abschließenden Wand ab.

Der Nachteil dieser Klimawände liegt in deren relativ großen Dicke und dem relativ geringen Beitrag zur Erwärmung des Raumes den sie durch die Strahlung der Wand leisten können.

Aufgrund der langjährigen Forschungsarbeiten von Ärzten (z.B. Dr.med. Ledwina, Dr. Luger) wurde die Erkenntnis gewonnen, daß für die Gesundheit, das Wohlbefinden und die Leistungsfähigkeit eines Menschen ist eine großflächige Wandstrahlungsheizung, und eine konvektive Entwärmung des Körpers und ein zumindest einfacher Luftwechsel von entscheidender Bedeutung. Eine Erwärmung des Menschen durch Aufnahme der von einer beheizten Wand abgestrahlten Wärme wird als besonders behaglich empfunden.

Die konvektive Entwärmung des Körpers ist nur dann möglich, wenn die Raumumschließungsflächen, insbesonders auch die Außenwände eine Oberflächentemperatur von mindestens 22°C gegenüber einer um ca. 5°C abgesenkten Raumlufttemperatur im Winter aufweisen.

Die richtige Entwärmung ist aber auch in der wärmeren Jahreszeit für die Behaglichkeit und Gesundheit die wichtigste Voraussetzung. bekanntlich sollte die Raumlufttemperatur das Mittel zwischen 20°C und der jeweiligen Außentemperatur aufweisen. Beispielsweise Außentemperatur 30°C, daher Raumlufttemperatur 25°C.

Bei einer länger anhaltenden Hitzeperiode, bzw. generell im Sommer in den südlichen Ländern, kommt es zu einem Temperaturausgleich zwischen der Außentemperatur und den Raumumschließungsflächen. Dieses Problem tritt besonders bei einer Leichtbauweise zu Tage, wo keine große Speichermasse im Haus vorhanden ist.

Die zu hohen Oberflächentemperaturen der Umschließungsflächen ermöglichen im Sommer dem menschlichen Körper eine zu geringe Entwärmung, wodurch es bekanntlich zu großen Kreislaufbelastungen, Schweißausbruch, Unbehagen und damit verbunden zu einer Leistungsverminderung kommt.

Um diesem bekannten Problem im Sommer Abhilfe zu verschaffen, werden Klimaanlagen in Wohn- und Bürogebäuden eingebaut, durch die die zirkulierende Raumluft gekühlt wird. Abgesehen von den großen Investitions- und Betriebskosten bewirken diese Systeme eine Verschlechterung der Atemluftqualität durch die Ionisationsverluste der Luft, verursachen durch den hohen Konvektionsanteil eine zu hohe Luftbewegung, wodurch insbesonders der Feinstaub mittransportiert und eingeatmet wird. Ein weiterer Nachteil der Klimaanlage ist eine künstlich aufbereitete Luft, die sich von der Außenluft unterscheidet und wodurch negative Auswirkungen auf die Gesundheit entstehen können.

Eine Klimawand, bei der die vom Heiz- oder Kühlmedium durchströmbaren Rohre überdeckt sind, wurde z.B. durch die FR-PS 2 390 684 bekannt. Bei dieser bekannten Lösung sind die Leitungen auf der mit Vorsprüngen versehenen Montageplatte angeordnet und mit Blech mit Abständen von den Leitungen abgedeckt.

Dabei ergibt sich jedoch der Nachteil eines relativ schlechten Wärmeüberganges von den Leitungen zum Raum, da zwischen der Montageplatte und der Blechabdeckung ein entsprechender Luftraum verbleibt. Außerdem ergibt sich bei dieser bekannten Wand auch ein relativ hoher Wärmeabfluß über die Montageplatte und der an diese anschließende Wand.

Ziel der Erfindung ist es, eine Klimaplatte der eingangs erwähnten Art vorzuschlagen, bei der ein guter Wärmeübergang von den Leitungen zur Abdeckung gegen den zu klimatisierenden Raum sichergestellt ist, und die sich leicht herstellen und montieren läßt.

Erfindungsgemäß wird dies dadurch erreicht, daß die Leitungen in einer Schicht aus einem hydraulisch abbindenden Mörtel oder einem Bindemittel auf Kunstharzbasis, der bzw. das mit Metallfasern aus gut wärmeleitenden Metallen, wie Stahl, Aluminium oder Kupfer vermischt ist, eingebettet sind.

Durch diese Maßnahmen ergibt sich der Vorteil, daß die Leitungen allseitig von einem gut wärmeleitenden Material umgeben sind. Dadurch ergeben sich nur geringe Temperaturdifferenzen zwischen der Temperatur der Leitung und der raumseitigen Fläche der erfindungsgemäßen Klimaplatte, wobei diese sowohl für Heiz- wie auch für Kühlzwecke eingesetzt werden kann. Außerdem ergibt sich aufgrund der durch die Metallfasern bedingten guten Wärmeleitfähigkeit des Mörtels oder Bindemittels eine weitgehend gleichmäßige Temperaturverteilung an der raumseitigen Fläche der Klimaplatte.

Durch die Beigabe von Metallfasern wird auch eine entsprechend hohe Festigkeit der Platte erreicht, sodaß diese leicht handhabbar ist und einfach an einer Wand oder Decke montiert werden kann.

Nach einem weiteren Merkmal der Erfindung kann vorgesehen sein, daß die Metallfasern eine Länge von 0,2 bis 5cm aufweisen.

Auf diese Weise lassen sich die Metallfasern ohne Probleme in die Mörtelmasse einbringen und sichern andererseits eine relativ hohe Festigkeit der Klimaplatte.

Weiters kann vorgesehen sein, daß in der die Leitungen aufnehmenden Schicht auch Metallpulver und bzw. oder Metallplättchen mit einer Teilchengröße von max. 1mm enthalten sind.

Durch die Beigabe von Metallpulver, dessen Partikel kugel- und bzw. oder plättchenförmig sein können, kann eine sehr gleichmäßige Verteilung der gut wärmeleitenden Metallpartikel erreicht werden, wodurch ein sehr gleichmäßiger Wärmeübergang erreicht wird.

Nach einem weiteren Merkmal der Erfindung kann vorgesehen sein, daß die Klimaplatte mehrschichtig aufgebaut ist und die raumseitige Schicht der Klimaplatte, mit einer Dicke von 1 bis 3,5mm, als Zuschlag überwiegend längere Metallfasern mit einer Länge von 3 bis 5cm enthält, wobei der Gewichtsanteil an längeren Metallfasern das Fünf- bis Zehnfache des Gewichtsanteiles an Metallpulver beträgt.

Durch diese Maßnahmen wird eine besonders gut wärmeleitende Schicht erzielt, wodurch eine sehr gleichmäßige Verteilung der Temperatur an der dem zu klimatisierende Raum zugekehrte Fläche der Klimaplatte erreicht wird.

Weiters kann vorgesehen sein, daß die Leitungen von einer Mörtel- oder Bindemittelschicht umgeben sind, die kurze Metallfasern mit einer Länge von 0,2cm bis 1cm enthält, die vorzugsweise dünner als 1mm sind und deren Gewichtsanteil das Zwei- bis Vierfache des Gewichtsanteiles an Metallpulver beträgt.

Durch die Verwendung von kürzeren Metallfasern und einem höheren Anteil an Metallpulver wird eine bessere und innigere Einbettung der Leitungen ermöglicht.

Weiters kann vorgesehen sein, daß der Metallgehalt des Mörtels oder des Bindemittels 10 bis 80 Gew.%, vorzugsweise 40 bis 60 Gew.% beträgt.

Durch den relativ hohen Anteil an Metallteilen im Mörtel bzw. Bindemittel wird ein entsprechend geringer Wärmedurchgangswiderstand sichergestellt.

Nach einem weiteren Merkmal der Erfindung kann vorgesehen sein, daß die Leitungen in im Querschnitt glockenförmigen Wülsten aus Metallfasern und gegebenenfalls auch Metallpulver enthaltendem Mörtel oder Bindemittel eingebettet sind, deren breitere Bereiche raumseitig liegen und vorzugsweise mit einer die benachbarten Wülste verbindenden Schicht aus Metallfasern und gegebenenfalls Metallpulver enthaltenden Mörtel oder Bindemittel überdeckt sind.

Dabei kann weiters vorgesehen sein, daß an der vom Raum abgekehrten Seite der die Leitungen umgebenden Umhüllung aus Metallfasern und gegebenenfalls Metallpulver enthaltendem Mörtel oder Bindemittel eine Platte aus einem wärmeisolierenden Material angebracht ist.

Auf diese Weise ergibt sich der Vorteil, daß ein Wärmefluß im wesentlich nur zwischen den Leitungen und der dem zu klimatisierenden Raum zugekehrten Fläche der Klimaplatte erfolgt, wodurch Verluste weitgehend vermieden werden.

Weiters kann vorgesehen sein, daß der Metallfasern und gegebenenfalls Metallpulver enthaltende Mörtel oder das Metallfasern und gegebenenfalls Metallpulver enthaltende Bindemittel eine poröse Konsistenz aufweist.

Solche Klimaplatten eignen sich besonders für Decken, da solch Klimaplatten auch gleichzeitig schallabsorbierend wirken. Es ist aber auch möglich, den Mörtel oder das Bindemittel vor dem Erhärten zu verdichten, um eine sehr feste Klimaplatte zu erhalten, wobei in einem solchen Falle ein hoher Anteil an Metallpartikeln zugesetzt werden kann.

Nach einem weiteren Merkmal der Erfindung kann vorgesehen sein, daß die Leitungen auf einer Blechplatte aufliegen und von auf der Blechplatte haftenden Wülsten aus einem Metallfasern und gegebenenfalls Metallpulver enthaltendem Mörtel oder Bindemittel überdeckt sind.

Solche Platten eignen sich auch zur Verwendung als Sonnenkollektoren.

Um eine Korrosion der zugesetzten Metallpartikel zu vermeiden, sollen nicht alkalibeständige Metalle, wie Aluminium und seine Legierungen, Kupfer und seine Legierungen, Zink u.a. nur nicht alkalisch reagierenden Mörtelmassen zugesetzt werden. Letztere sind solche, die z.B. Calciumoxid oder Calciumhydroxid enthalten, wie z.B. Beton aus Portlandzement. Für solche alkalisch reagierende Mörtelmassen können Stahl oder nichtrostender Stahl verwendet werden.

Die Wärmeleitfähigkeit des für die erfindungsgemäße Klimaplatte vorgesehenen Mörtels ergibt sich angenähert aus dem Mischungsverhältnis des Metallanteiles und den übrigen Bestandteilen des Mörtels und den Wärmeleitzahlen des verwendeten Metalls und des entsprechenden Mörtels ohne Metallzusatz, wobei die üblichen Mischungsregeln zur Anwendung zu bringen sind.

Die erfindungsgemäßen Klimaplatten können in verschiedener Weise hergestellt werden.

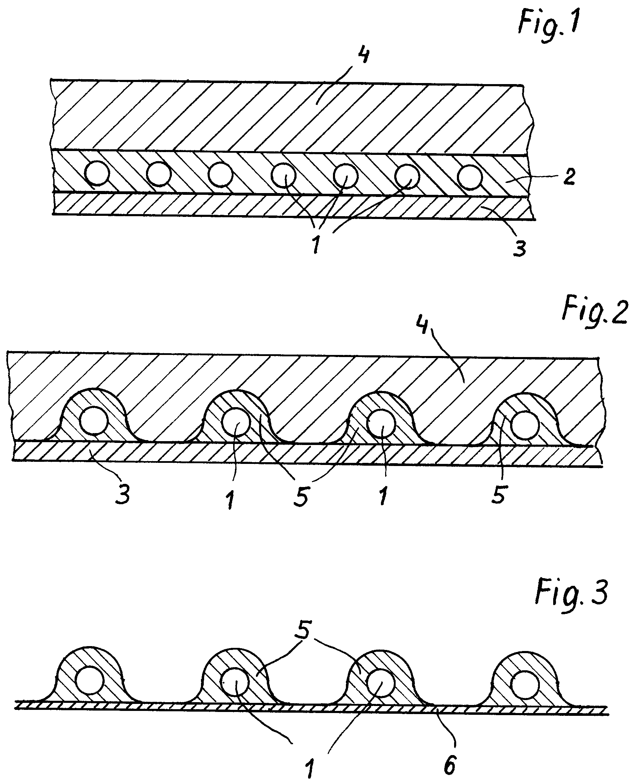

Die Erfindung wird nun anhand der Zeichnung näher erläutert. Dabei zeigen die Fig. 1 bis 3 Querschnitte durch verschiedene Ausführungsformen von Klimaplatten.

Bei der Ausführungsform nach der Fig. 1 sind die von einem Heiz- oder Kühlmedium durchströmbaren Leitungen 1 in einer Mörtelschicht 2 eingebettet, die überwiegend kurze Metallfasern mit Längen von ca, 0,2 bis 1cm, sowie Metallpulver enthält. Dabei beträgt der Gewichtsanteil an Metallfasern etwa das Zwei- bis Vierfache des Gewichtsanteiles an Metallpulver.

Diese Schicht 2 ist raumseitig von einer Schicht 3 überdeckt, die einen großen Anteil an längeren Metallfasern mit Längen von 3 bis 5cm und nur einen geringen Anteil an Metallpulver als Zuschlagstoffe enthält.

An der vom Raum abgekehrten Seite ist die Schicht 2 von einer schlecht wärmeleitenden Schicht 4 überdeckt, die z.B. aus einer Mörtelschicht, ohne gut wärmeleitende Zuschlagstoffe, wie eben Metallfasern oder Metallpulver, bestehen kann.

Bei der Ausführungsform nach de Fig. 2 sind die Leitungen 1 in im Querschnitt glockenförmigen Wülsten 5 eingebettet, die aus einem überwiegend kurze Metallfasern und Metallpulver enthaltenden Mörtel bestehen. Dabei ist die Zusammensetzung des Mörtels der Wülste 5 im wesentlichen gleich mit jener der Schicht 2 der Klimaplatte nach der Fig. 1 und dient zur Erzielung einer gut wärmeleitenden Verbindung der Leitungen 1 mit der raumseitigen Schicht 3 der Klimaplatte, die für eine gleichmäßige Wärmeverteilung über die gesamte dem zu klimatisierenden Raum zugekehrte Fläche der Klimaplatte sorgt.

Die Wülste 5 stehen mit ihrer breiteren Fläche auf der Schicht 3 auf, die aus einem Mörtel mit einem hohen Anteil an langen Metallfasern besteht. Dabei kann der Gewichtsanteil an Metallfasern in der Schicht 3 bis zu 80% betragen.

Zwischen und über den Wülsten 5 ist wieder eine Schicht 4 aus einem schlecht wärmeleitenden Mörtel angeordnet.

Bei der Ausführungsform nach der Fig. 3 sind die die Leitungen 1 umgebenden Wülste 5, die aus einem eher kürzere Metallfasern enthaltenden Mörtel hergestellt sind, auf einem Blech 6 angeordnet und mit diesem verbunden. Eine solche Klimaplatte eignet sich besonders zur Verwendung als Sonnenkollektor, wobei das Blech 6 zur Aufnahme von Wärme dient, und die Wülste 5 zur Erzielung eines guten Wärmeüberganges vom Blech 6 zu den Leitungen 1 vorgesehen sind, die von einem Wärme aufnehmenden Medium durchströmt sind.

Bei der Erstellung der Klimaplatten ist es wesentlich, daß die Leitungen dicht von einem Metallfasern enthaltenden Mörtel umgeben und Hohlräume vermieden sind. Dies läßt sich durch Eindrücken der Leitungen 1 in ein entsprechendes Mörtelbett, anschließendes Überdecken der Leitungen und entsprechendes Rütteln zur Erzielung einer entsprechenden Verdichtung der Umhüllung der Leitungen 1, bewerkstelligen, wobei auch allfällige Luftblasen ausgetrieben und dadurch Hohlräume zwischen den Leitungen 1 und dem Mörtelmantel vermieden werden.

Bei der Aufbringung der einzelnen Schichten ist es vorteilhaft, wenn die zweite Schicht im noch feuchten Zustand der vorher hergestellten Schicht aufgebracht wird, um eine gute Abbindung der beiden Schichten zu erreichen. So kann z.B. bei der Klimaplatte nach der Fig. 1 die Schicht 2 auf eine noch feuchte Schicht 3 aufgebracht werden, und nach dem Einbetten der Leitungen 1 und Überdecken derselben die Schicht 4 auf die noch feuchte Schicht 2 aufgebracht werden. Grundsätzlich kann aber auch in umgekehrter Reihenfolge vorgegangen werden.

In gleicher Weise kann z.B. bei der Ausführungsform nach der Fig. 2 eine Schicht 4, die bereits mit den entsprechenden Rillen zur Aufnahme der Wülste 5 hergestellt wurde, mit einem mit kurzen Metallfasern versetzten Mörtel ausgegossen und die Leitungen eingelegt werden. Nach dem Überdecken der Leitungen mit dem gleichen Mörtel und allenfalls Verdichten kann auf die noch feuchten Wülste 5 die raumseitige Schicht 3 aufgebracht werden, die aus einem mit langen Metallfasern versetzten Mörtel besteht.

## Patentansprüche

1. Klimaplatte, insbesondere für Wohn- und Büroräume mit auf einer Trägerschicht angeordneten, von einem Kühl- und oder Heizmedium durchströmbaren Leitungen, die gegen den zu klimatisierenden Raum zu abgedeckt sind, **dadurch gekennzeichnet,** daß die Leitungen (1) in einer Schicht (2) aus einem hydraulisch abbindenden Mörtel oder einem Bindemittel auf Kunstharzbasis, der bzw. das mit Metallfasern aus gut wärmeleitenden Metallen, wie Stahl, Aluminium oder Kupfer vermischt ist, eingebettet sind.

2. Klimaplatte nach Anspruch 1, **dadurch gekennzeichnet,** daß die Metallfasern eine Länge von 0,2 bis 5cm aufweisen.

3. Klimaplatte nach Anspruch 1 oder 2, **dadurch gekennzeichnet,** daß in der die Leitungen (1) aufnehmenden Schicht (2) auch Metallpulver und bzw. oder Metallplättchen mit einer Teilchengröße von max. 1mm enthalten sind.

4. Klimaplatte nach Anspruch 3, **dadurch gekennzeichnet,** daß die Klimaplatte mehrschichtig aufgebaut ist und die raumseitige Schicht (3) der Klimaplatte, mit einer Dicke von 1 bis 3,5mm, als Zuschlag überwiegend längere Metallfasern mit einer Länge von 3 bis 5cm enthält, wobei der Gewichtsanteil an längeren Metallfasern das Fünf- bis Zehnfache des Gewichtsanteiles an Metallpulver beträgt.

5. Klimaplatte nach einem der Ansprüche 1 bis 4, **dadurch gekennzeichnet,** daß die Leitungen (1) von einer Mörtel- oder Bindemittelschicht (2) umgeben sind, die kurze Metallfasern mit einer Länge von 0,2cm bis 1cm enthält, die vorzugsweise dünner als 1mm sind und deren Gewichtsanteil das Zwei- bis Vierfache des Gewichtsanteiles an Metallpulver beträgt.

6. Klimaplatte nach einem der Ansprüche 1 bis 5, **dadurch gekennzeichnet**, daß der Metallgehalt des Mörtels oder des Bindemittels 10 bis 80 Gew.% beträgt.

7. Klimaplatte nach einem der Ansprüche 1 bis 6, **dadurch gekennzeichnet,** daß die Leitungen (1) in im Querschnitt glockenförmigen Wülsten (5) aus Metallfasern und gegebenenfalls auch Metallpulver enthaltendem Mörtel oder Bindemittel eingebettet sind, deren breitere Bereiche raumseitig liegen und vorzugsweise mit einer die benachbarten Wülste (5) verbindenden Schicht (3) aus Metallfasern und gegebenenfalls Metallpulver enthaltenden Mörtel oder Bindemittel überdeckt sind.

8. Klimaplatte nach einem der Ansprüche 1 bis 7, **dadurch gekennzeichnet,** daß an der vom Raum abgekehrten Seite der die Leitungen (1) umgebenden Umhüllung aus Metallfasern und gegebenenfalls Metallpulver enthaltendem Mörtel oder Bindemittel eine Platte oder Schicht (4) aus einem wärmeisolierenden Material angebracht ist.

9. Klimaplatte nach einem der Ansprüche 1 bis 8, **dadurch gekennzeichnet,** daß der Metallfasern und gegebenenfalls Metallpulver enthaltende Mörtel oder das Metallfasern und gegebenenfalls Metallpulver enthaltende Bindemittel eine poröse Konsistenz aufweist.

10. Klimaplatte nach Anspruch 1, **dadurch gekennzeichnet,** daß die Leitungen (1) auf einer Blechplatte (6) aufliegen und von auf der Blechplatte (6) haftenden Wülsten (5) aus einem Metallfasern und gegebenenfalls Metallpulver enthaltendem Mörtel oder Bindemittel überdeckt sind.
